# EUROPEAN PATENT SPECIFICATION

(11) **EP 2 671 674 B1**
(45) Date of publication and mention of the grant of the patent: **18.02.2015**
(21) Application number: 13167448.3
(22) Date of filing: 13.05.2013
(51) Int. Cl.: B23Q 3/157, B23Q 11/08

(54) **Machine tool**
Werkzeugmaschine
Machine-outil

(30) Priority: 05.06.2012 JP 2012128150
(43) Date of publication of application: 11.12.2013
(73) Proprietor: Brother Kogyo Kabushiki Kaisha, Nagoya-shi, Aichi 467-8561 (JP)
(72) Inventor: Ishibashi, Nobuaki, Nagoya-shi, Aichi 467-8562 (JP); Tsuji, Shunsuke, Nagoya-shi, Aichi 467-8562 (JP)
(74) Representative: Prüfer & Partner GbR European Patent Attorneys

(56) References cited:
- EP-A1- 1 598 145
- US-A- 4 238 034

## Description

### BACKGROUND

### 1. Technical Field

The present invention relates to a machine tool including a tool magazine that circulates plural grip arms along a circulation pathway which grip tools and are able to swing, and a machine spindle unit that is arranged in the circulation pathway and receives a tool gripped by each grip arm to machine a machined object.

### 2. Description of Related Art

A machine tool sequentially exchanges a tool mounted to the machine spindle unit, to perform several machining. The tool is mounted to the machine spindle unit through a tool holder. A machine spindle unit has a tool mount hole opened at the edge portion. A tool holder has a fitting section. A machine spindle unit mounts the tool holder by fitting the fitting section of the tool holder into the tool mount hole.

The machine tool includes a tool magazine. The tool magazine includes plural grip arms that grip tools through the tool holder, and performs circulatory movement along the circulation pathway. The grip arm performs circulation based on the instruction from a control unit, and moves to an exchange position. A machine spindle unit moves upwardly from a machining position to move on the exchange position. The grip arm exchanges tools with the machine spindle unit moved on the exchange position.

When the machining at the machining position of the machine tool generates chips, the fitting section of the tool holder to which the generated chips attached is liable to be fit into the tool mount hole of the machine spindle unit. At that time, the positional aberration may be caused between the tool and machine spindle unit, the slewing motion may be caused on the tool by the rotating machine spindle unit, and the accuracy may be deteriorated. Thus, a machine tool in Japanese Patent Application Laid-Open Publication No. 2000-521285 spouts coolant to the tool holder before the tool holder is mounted to the machine spindle unit, and washes away the chips attached to the fitting section.

A machine tool according to the preamble of appended claim 1 is known from patent document EP-A-1598145.

### SUMMARY OF THE INVENTION

There is a problem that the chips generated at the machining position are dispersed in a wide range with the coolant provided for the cooling and lubricating, attach to several portions of the tool magazine and interfere the operation of the tool magazine. Although Japanese Patent Application Laid-Open Publication No. 2000-521285 may be able to remove the chips attached to the fitting section of the tool holder, it cannot prevent the attachment of chips onto several portions of the tool magazine. If the chips and coolant attach to each portion of the tool magazine, the failure may be caused on the circulation of the tool magazine. Then, the position of the grip arm may be shifted to cause the positional aberration on the tool with respect to the machine spindle unit, and the machining accuracy may be deteriorated.

An object of the present invention is to provide a machine tool that inhibits the attachment of chips and coolant onto the tool magazine, makes the tool magazine work well, keeps good positional accuracy of the tool with respect to the grip arm, and machine spindle unit, and inhibits the deterioration of the machining accuracy.

A machine tool according to a first aspect of the present invention has a column disposed on a base in a manner movable right and left as well as back and forth, a machine spindle unit disposed on the column in a manner movable upwardly and downwardly, plural grip arms gripping tools and being able to swing around arm shafts, a tool magazine making the plural grip arms circulate along a circulation pathway around a axis and a magazine drive section driving the tool magazine, wherein a tool gripped by the grip arm is exchanged to a tool of the machine spindle unit by an up and down movement of the machine spindle unit, and the machine tool comprises a cover which covers the grip arms and the tool magazine, wherein the cover comprises an upper plate portion which is disposed on an upper side of the circulation pathway and has an opening at a center portion through which the machine spindle unit and the column can pass, an outer plate portion which extends to a lower side from an outer perimeter of the upper plate portion, an inner plate portion which extends to a lower side from an edge, excluding the magazine drive section's side and the machine spindle unit's side, among an inner perimeter of the upper plate portion, and a lower plate portion which extends to the lower side and the opening's side from a lower edge of the outer plate portion, the axis is inclined to the machine spindle unit's side with respect to a vertical line, and the lower plate portion positioned at the machine spindle unit's side includes a notch at a lower edge through which the grip arm can pass when the grip arm swings.

Because the axis in the tool magazine is inclined to the machine spindle unit's side with respect to the vertical line, it is possible to make the machine tool smaller as a whole than a machine tool in which the axis is vertically arranged. Because the upper plate portion, outer plate portion, inner plate portion and lower plate portion covers the circulation pathway and the grip arm, it is possible to prevent the chip and coolant from attaching to the grip arm. Therefore, the machine tool inhibits the positional aberration of the tools with respect to the machine spindle unit, and inhibits the deterioration of machining accuracy. The notch arranged on the lower plate portion prevents the grip arm from hitting to the lower plate portion when the grip arm swings.

The machine tool according to a second aspect of the present invention comprises an arm cover disposed around a portion where the grip arm grips the tool.

Because the arm cover is disposed close to a portion where the tool is gripped, it is possible to effectively inhibit the attachment of chips.

The machine tool according to a third aspect of the present invention includes the grip arm which comprises a support rod, a pair of guide plates fixed at both sides of the support rod, and an arm section disposed between the pair of guide plates, wherein the arm shaft is fixed to the support rod and the guide plates, and supports the arm section in a swingable manner, the support rod comprises a number plate indicating a number of the grip arm, and
the outer plate portion at a position facing to the number plate includes a window portion.

The number plate is disposed on the support rod of the grip arm, as the support rod does not swing. Furthermore, the number plate positions at the inner side of the cover. Because the outer plate portion of the cover includes the window portion at a position opposing to the number plate, the worker can look at and recognize the number plate through the window portion from the outside. Therefore, the worker can identify the grip arm.

Because the number plate does not swing, it is possible to form the window portion smaller than a window portion when the number plate is disposed at a swingable position. Therefore, it is possible to inhibit the attachment of chips and the like onto the number plate through the window portion, and the machine tool can reduce the stain of the number plate.

The machine tool according to a fourth aspect of the present invention includes the window portion which is disposed on the outer plate portion at a position corresponding to the notch and facing to the number plate of the grip arm.

The worker can recognize the number of the grip arm gripping the tool mounted to the spindle or the tool to be mounted to the spindle later.

### BRIEF DESCRIPTION OF THE DRAWINGS

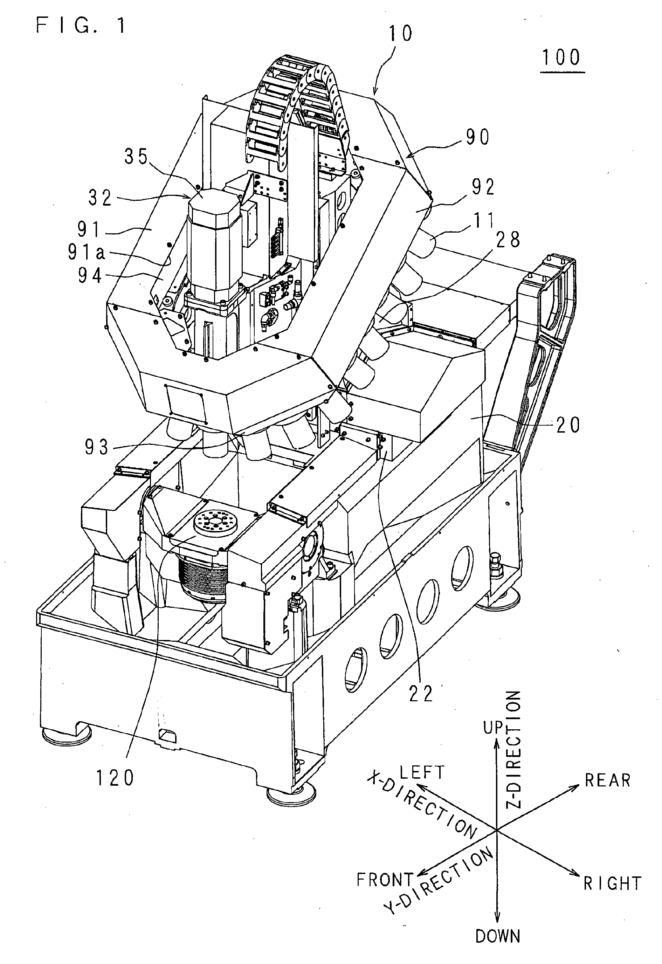

FIG. 1 is a perspective view showing a machine tool.

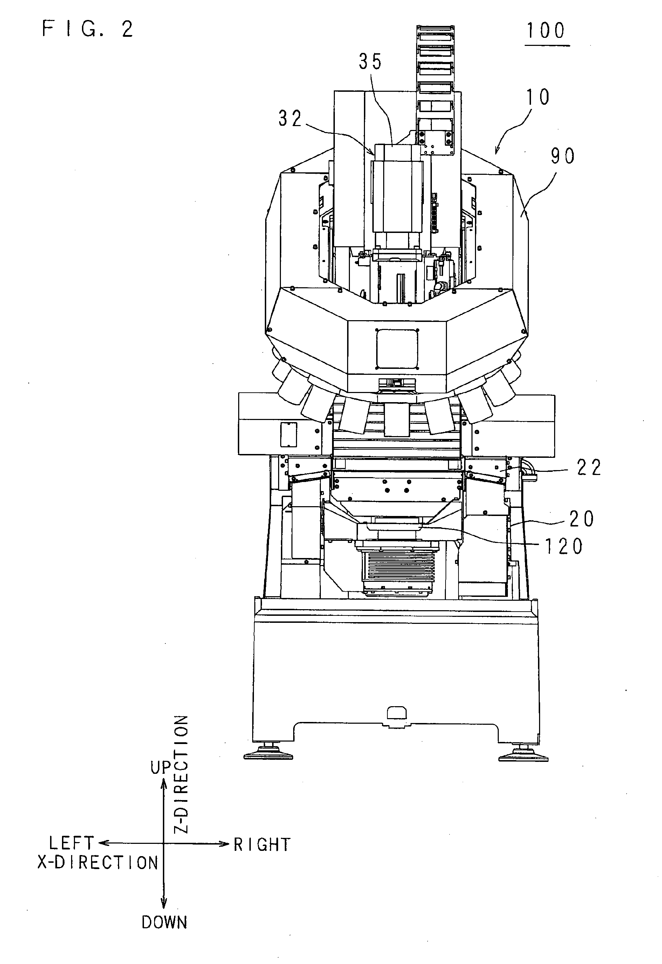

FIG. 2 is a front view showing the machine tool.
FIG. 3 is a right side view showing the machine tool.
FIG. 4 is a perspective view showing the machine tool in which a cover is omitted.

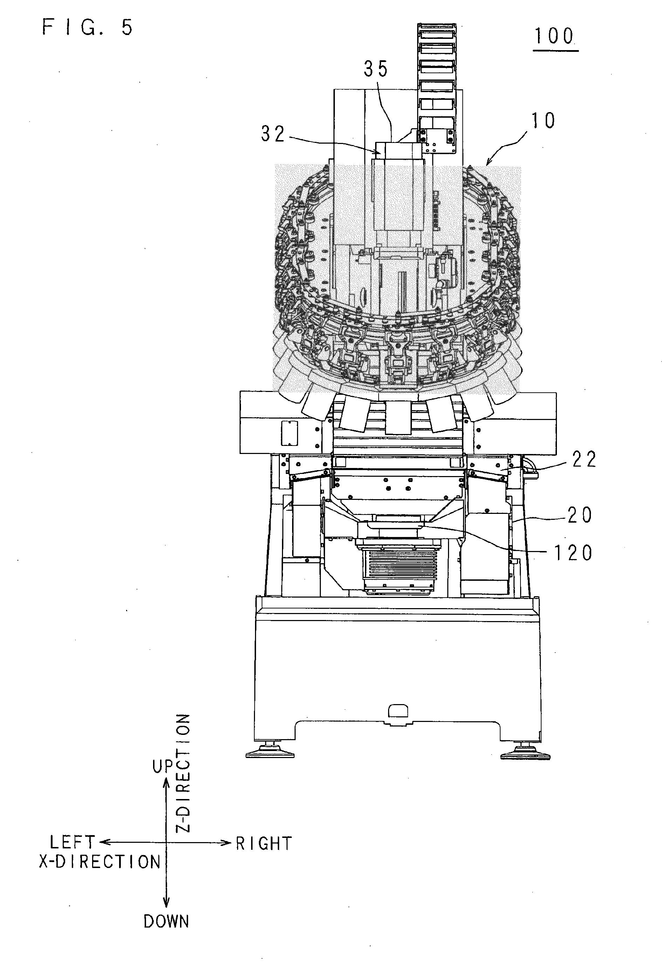

FIG. 5 is a front view showing the machine tool in which the cover is omitted.
FIG. 6 is a right side view showing the machine tool in which the cover is omitted;

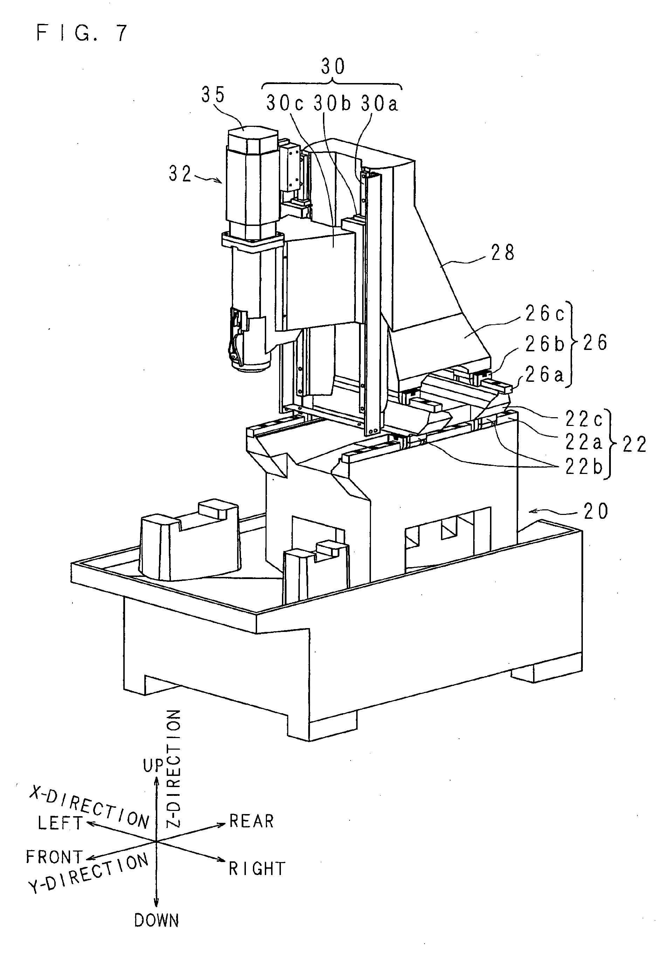

FIG. 7 is a perspective view showing the machine tool in which a tool exchange apparatus and the cover are omitted.
FIG. 8 is a fragmentary sectional view schematically showing a spindle head.
FIG. 9 is a perspective view schematically showing a rail section.

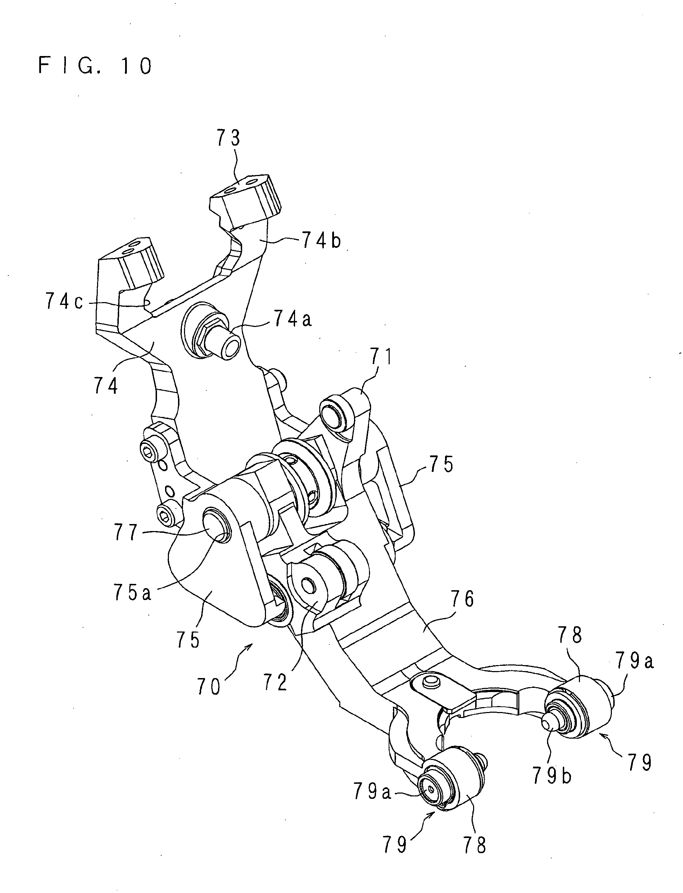

FIG. 10 is a perspective view showing a grip arm.
FIG. 11 is a perspective view schematically showing a moving carriage and the grip arm.

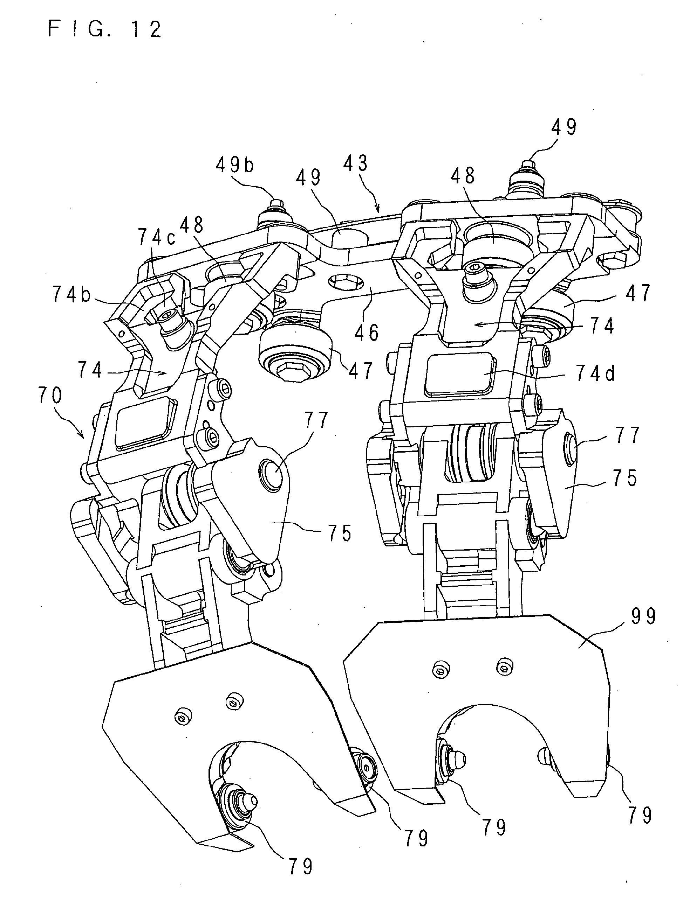

FIG. 12 is a perspective view showing a condition in which a tool holder is detached from the grip arm.

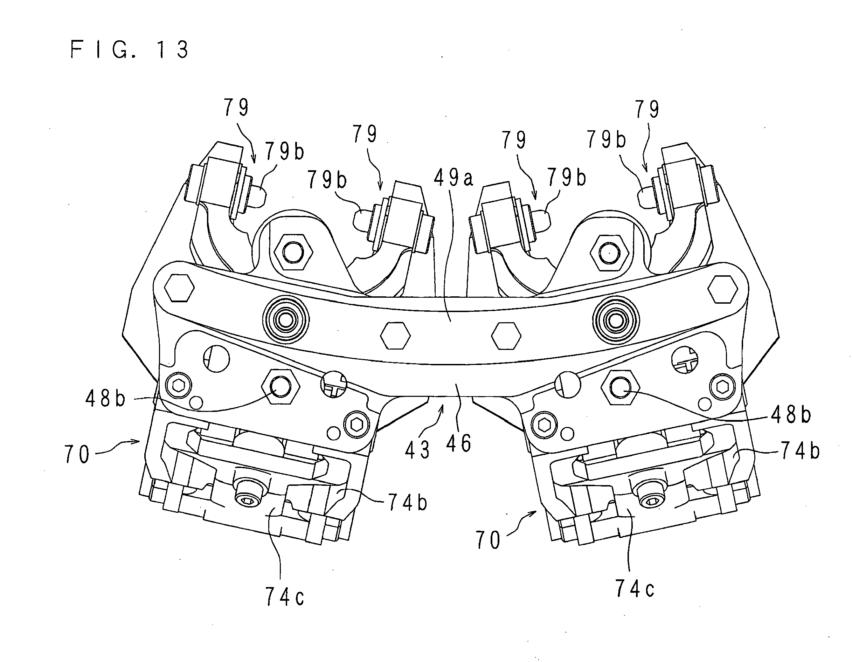

FIG. 13 is a plain view schematically showing the moving carriage and the grip arm.
FIG. 14 is a sectional view schematically showing the moving carriage attached to the rail.
FIG. 15 is a perspective view schematically showing a cam mechanism, the grip arm, and a positioning mechanism.
FIG. 16 is a perspective view showing the cover.

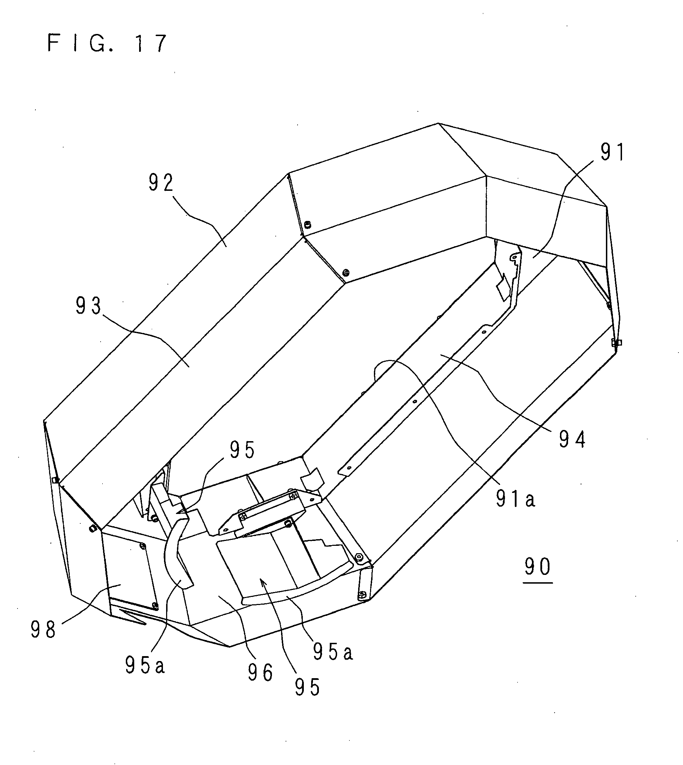

FIG. 17 is a perspective view showing the cover.

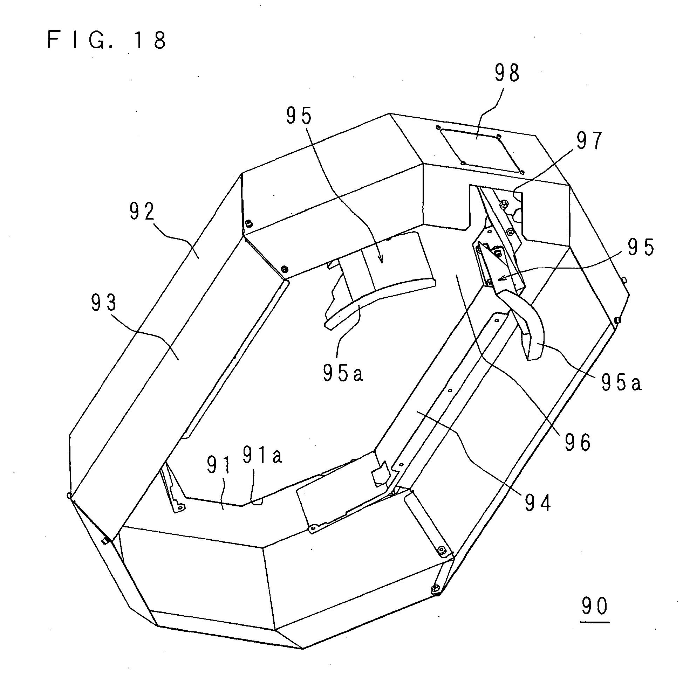

FIG. 18 is a perspective view showing the cover.

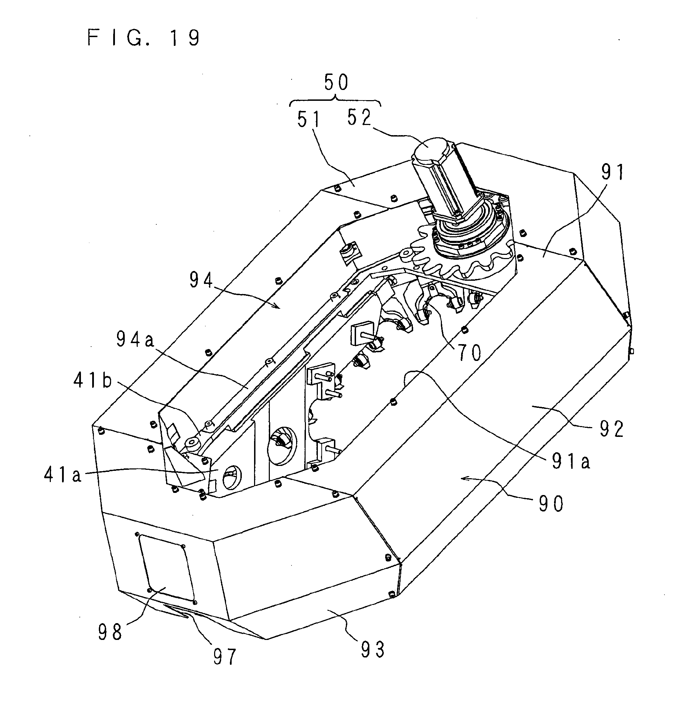

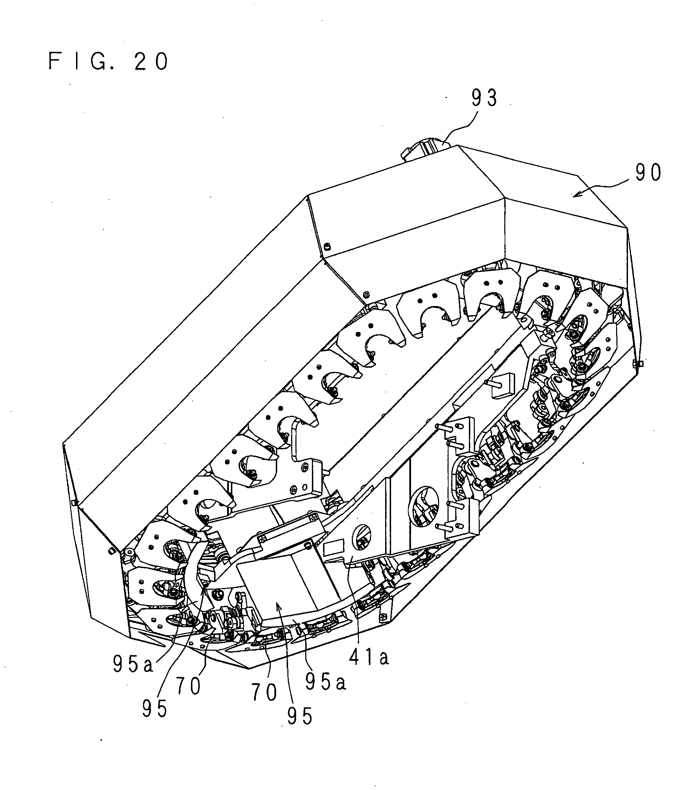

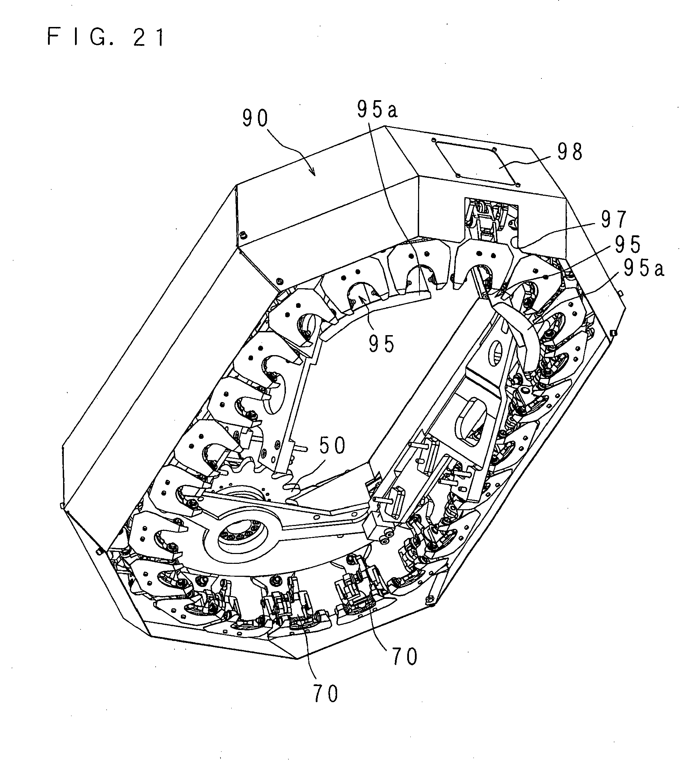

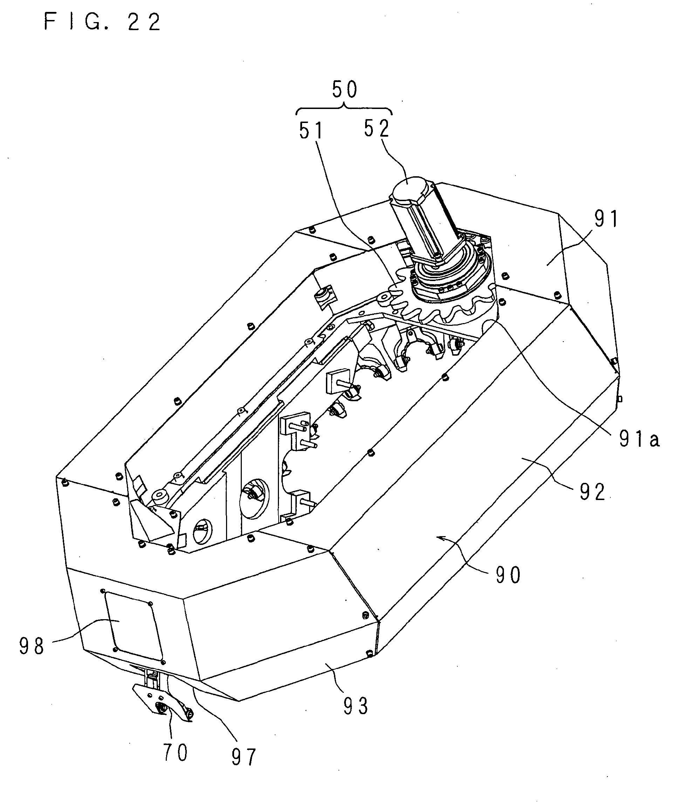

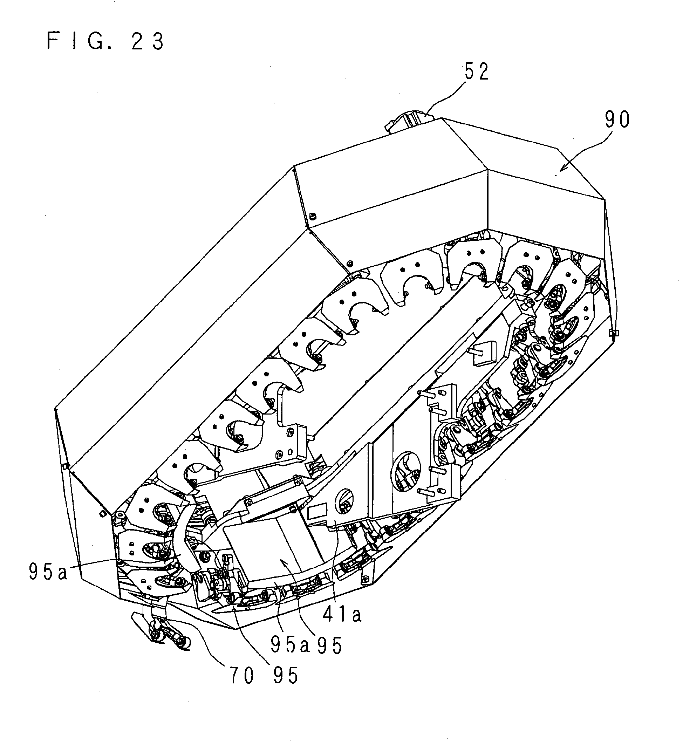

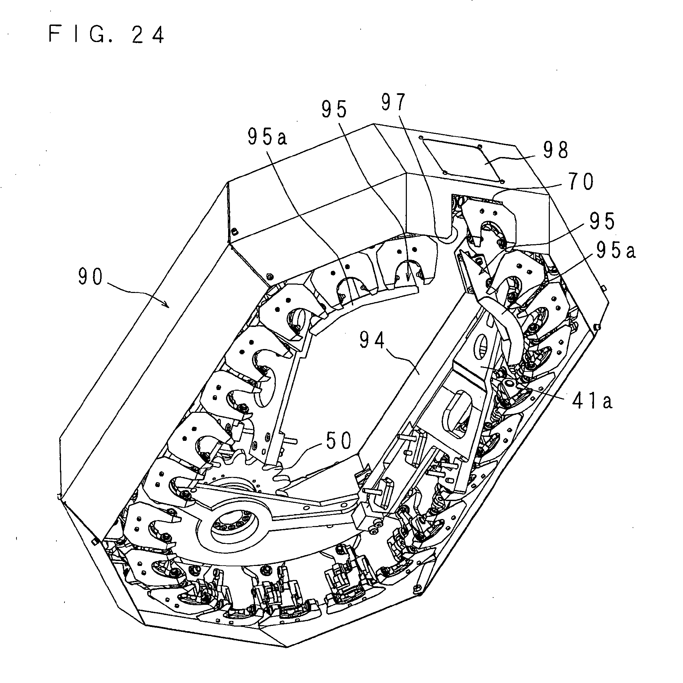

FIG. 19 to FIG. 24 are perspective views showing a condition in which the tool magazine is covered by the cover.
FIG. 25 is a front view showing the condition in which the tool magazine is covered by the cover.

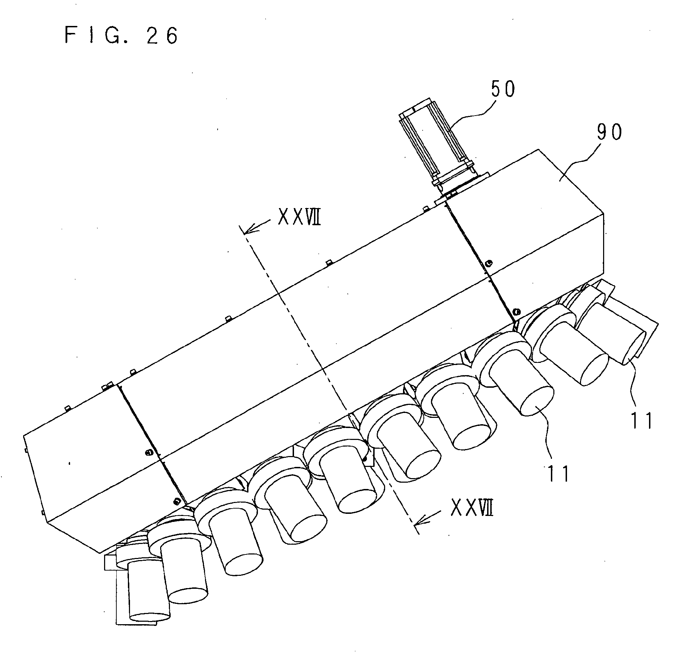

FIG. 26 is a side view showing the condition in which the tool magazine is covered by the cover.

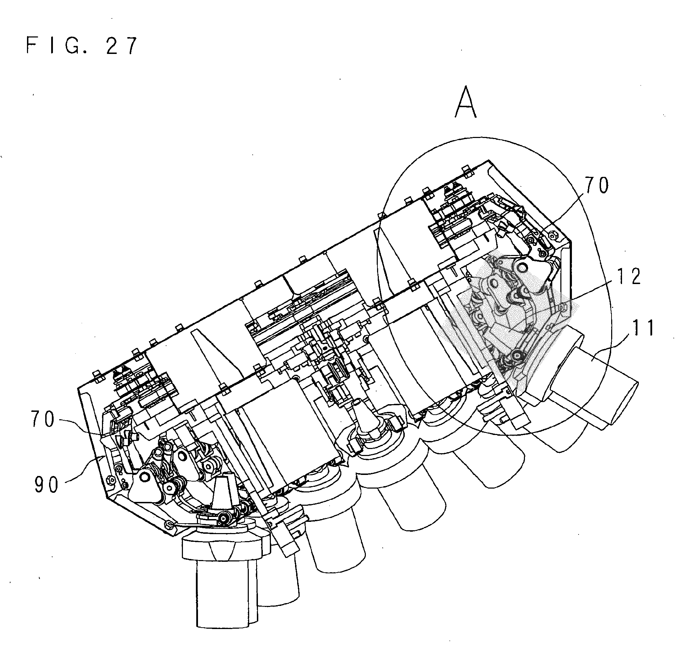

FIG. 27 is a sectional view taken on line XXVII-XXVII of FIG. 26.
FIG. 28 is an enlarged view for an A portion of FIG. 27.

### Embodiment

Machine tools according to Embodiments of the present invention will be described on the side of the accompanying drawings. In the following descriptions, the up-down direction, the left-right direction, and the front-rear direction indicated by the arrows shown in the drawings are used. The worker operates a machine tool in front thereof and mounts/dismounts work.

A machine tool 100 has a base 20, a Y-direction moving device 22, an X-direction moving device 26, a column 28, a Z-direction moving device 30, a spindle head 32, a tool exchanging device 10. The base 20 is arranged onto the face of the floor. The base 20 supports the column 28 so that the column 28 is movable in the X-direction (the left-right direction) and in the Y-direction (the front-rear direction) via the Y-direction moving device 22 and the X-direction moving device 26. The base 20 supports a work holding device 120 that is used to hold work serving as an object to be machined while driving the work around two axes. The column 28 movably supports the spindle head 32 in the Z-direction (the up-down direction) via the Z-direction moving device 30.

The Y-direction moving device 22 has a pair of guide rails 22a being parallel with each other, a plurality of blocks 22b, a Y-direction moving carriage 22c, and a Y-direction drive motor (not shown). The guide rails 22a extend in the front-rear direction on the upper face of the base 20 with an appropriate clearance therebetween in the left-right direction. The blocks 22b are fitted on the guide rails 22a so as to be movable in the front-rear direction. The Y-direction moving carriage 22c is secured onto the blocks 22b. The Y-direction moving carriage 22c is moved in the front-rear direction by the drive of the Y-direction drive motor.

The X-direction moving device 26 has a pair of guide rails 26a being parallel with each other, a plurality of blocks 26b, a column base 26c, and an X-direction drive motor (not shown). The guide rails 26a extend in the left-right direction on the upper face of the Y-direction moving carriage 22c with an appropriate clearance therebetween in the front-rear direction. The blocks 26b are movably fitted on the guide rails 26a in the left-right direction. The column base 26c is secured onto the blocks 26b. The column base 26c is moved in the left-right direction by the drive of the X-direction drive motor.

The column 28 is secured onto the column base 26c. The column 28 is moved in the Y-direction and the X-direction by the Y-direction moving device 22 and the X-direction moving device 26.

The Z-direction moving device 30 has a pair of guide rails 30a being parallel with each other, a plurality of blocks 30b, a spindle head base 30c, a Z-direction moving motor (not shown). The guide rails 30a extend in the up-down direction on the front face of the column 28 with an appropriate clearance therebetween in the left-right direction. The blocks 30b are movably fitted on the guide rails 30a in the up-down direction. The spindle head base 30c is secured onto the front face side of the blocks 30b. The spindle head base 30c is moved in the up-down direction by the drive of the Z-direction drive motor.

The spindle head 32 is secured to the spindle head base 30c. The spindle head 32 is moved in the front-rear direction, the left-right direction, and the up-down direction by driving and controlling the X-direction drive motor, the Y-direction drive motor, and the Z-direction moving motor. The spindle head 32 can move between a machining position for machining a work and an exchange position for exchanging a tool.

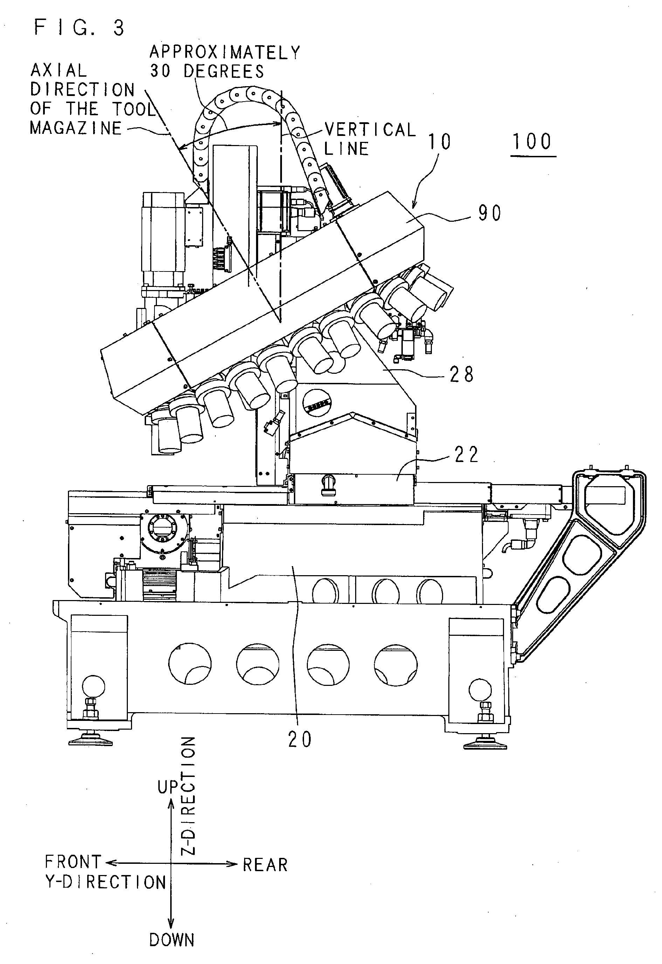

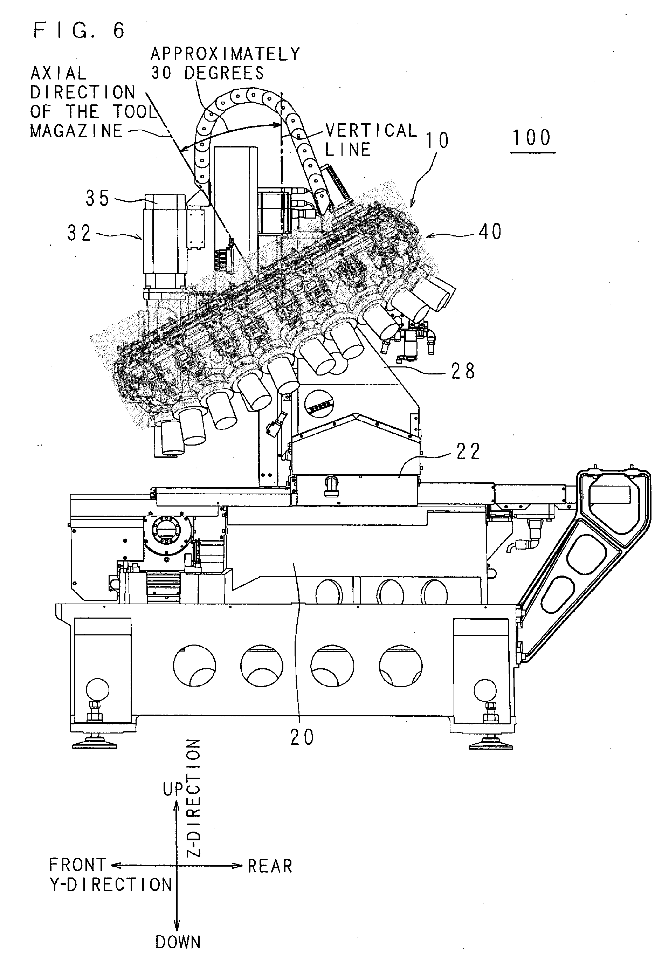

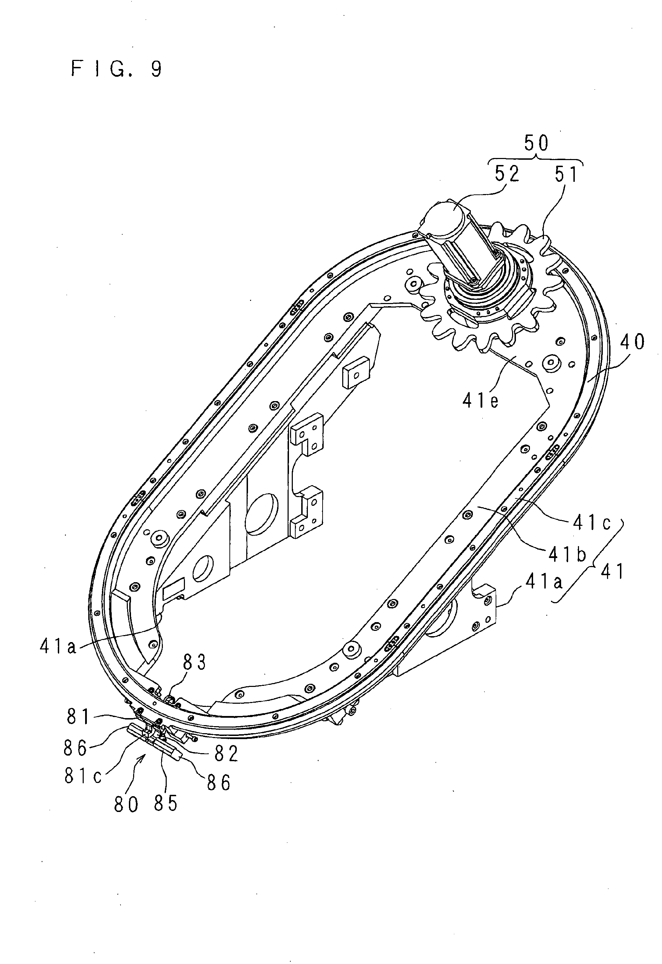

The tool exchanging device 10 has a tool magazine 40. The tool exchanging device 10 conveys a plurality of cylindrical tool holders 11, and each of the tool holders 11 is mounted and dismounted at the lower end section of a spindle 34 protruding from the lower section of the spindle head 32. The tool magazine 40 has a rail section 41 and a chain section 42. The rail section 41 has a pair of support beams 41a, a rail base 41b, and a rail 41c (see FIG. 9). The chain section 42 has a plurality of moving carriages 43, a plurality of link members 44, a plurality of grip arms 70. The rail 41c supports the plurality (for example, 11) of moving carriages 43, and the moving carriages 43 are movable on the rail 41c. Each of the link members 44 connects the moving carriages 43 being adjacent to each other. The plurality of moving carriages 43 and the plurality of link members 44 form an endless chain. The plurality (for example, 22) of grip arms 70 are connected to the lower sections of the moving carriages 43 and grip the tool holders 11. The moving carriages 43 of the tool magazine 40 circulate along the rail 41c, and the tool holder 11 gripped by each grip arm 70 is positioned at the exchange position below the spindle 34. Since the rail base 41b is disposed so as to be inclined approximately 30 degrees from the horizontal plane, the axial direction of the tool magazine 40 is inclined approximately 30 degrees toward the spindle head 32 from the vertical line (see FIG. 3 and FIG. 6).

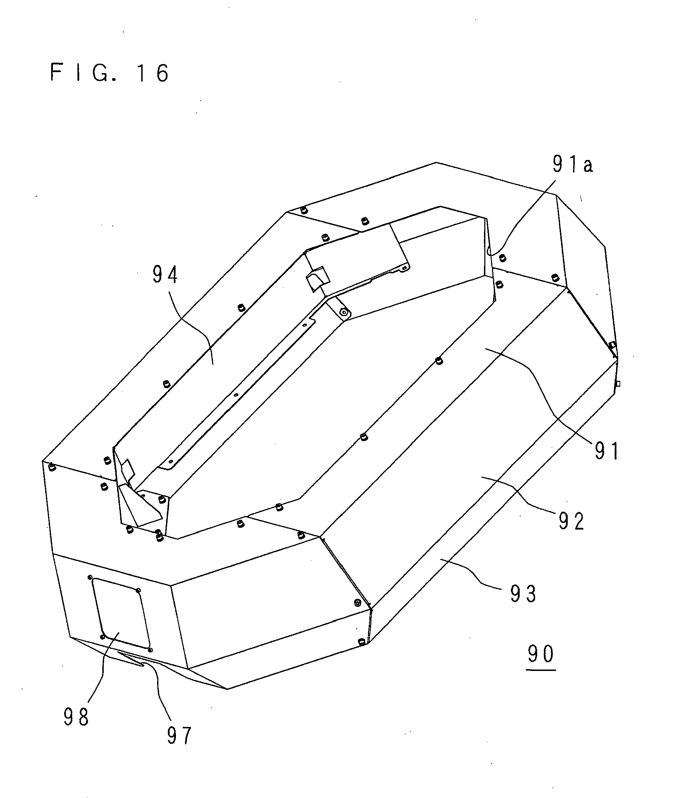

A cover 90 covers the tool magazine 40. The cover 90 includes an upper plate portion 91 that covers the upper section of the tool magazine 40, an outer plate portion 92 that covers an upper section at the outer circumferential side, a lower plate portion 93 that covers a lower section at the outer circumferential side (see FIG. 16), and an inner plate portion 94 that covers the inner circumferential side.

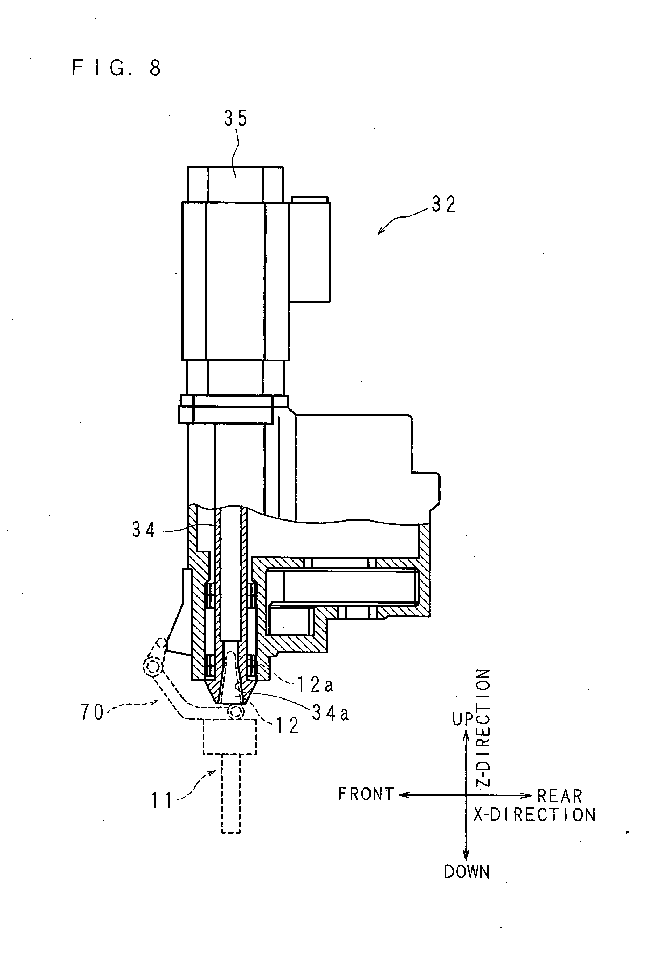

As shown in FIG. 8, the spindle head 32 rotatably holds the spindle 34 extending in the Z-direction in the inside thereof on the front side. The spindle 34 removably holds the tool holder 11 at the lower end section thereof. The spindle 34 has a hollow cylindrical shape and has a tapered bore 34a, the inside diameter of which increases in the downward direction to the lower end section. A tapered mounting section 12 formed on the upper section of the tool holder 11 is fitted in the tapered bore 34a, whereby the tool holder 11 is mounted in the spindle 34.

Above the tapered bore 34a of the spindle 34, a draw bar (not shown) is inserted so as to be movable in the axial direction of the spindle 34. A spring (not shown) is disposed around the draw bar. The spring biases the draw bar upward. The lower end section of the draw bar has a grip section (not shown). When the tapered mounting section 12 is mounted in the tapered bore 34a, the grip section grips a pull stud 12a protruding upward from the tapered mounting section 12. Since the draw bar is biased upward, the grip section keeps gripping the pull stud 12a.

The spindle head 32 has a pressing mechanism (not shown) above the draw bar. The pressing mechanism presses the draw bar downward against the elastic force of the spring. When the draw bar is pressed downward, the grip section releases the gripping of the pull stud 12a. When the grip section releases the gripping of the pull stud 12a, the tool holder 11 is dismounted from the spindle 34.

The spindle 34 is connected to a spindle motor 35 provided at the upper end of the spindle head 32. The spindle 34 is rotated around its axis by the drive of the spindle motor 35. The spindle 34 is rotated around its axis with the tool holder 11 mounted at the lower end thereof, and the work secured to the work holding device 120 is machined by the rotation.

The tool exchanging device 10 has a magazine drive section 50. The magazine drive section 50 has a gear 51 and a magazine drive motor 52. The rotation shaft of the magazine drive motor 52 is directly connected to the shaft of the gear 51 to rotate and drive the gear 51.

Each of the support beams 41a in the rail section 41 is a triangular plate member, the upper side of which is an oblique side inclined downward in the forward direction. The support beams 41a are secured to the left and right sides of the column 28 in a cantilever manner. The support beams 41a extend from the portions secured to the left and right sides of the column 28 to both side portions of the spindle head 32 so as to be inclined downwardly. The upper end faces of the support beams 41a is inclined approximately 30 degrees from the horizontal plane, from the front lower side to the rear upper side thereof.

The rail base 41b is an elliptic annular member and is secured to the support beams 41a so as to enclose the column 28 and the spindle head 32. The rail base 41b extends from the front lower side to the rear upper side thereof along the upper end faces of the support beams 41a while being inclined approximately 30 degrees from the horizontal plane (see FIG. 3 and FIG. 6). The semicircular portion on the rear side of the rail base 41b has a plate-shaped mounting base 41e extending from the periphery of the semicircular portion. The mounting base 41e supports the magazine drive section 50.

The positioning mechanism 80 has a base 81 secured to the lower end section of the rail base 41b. The lower end section of the rail base 41b is located at the exchange position.

The base 81 has a pin receiving section 81c L-shaped in side view. A rotation rod 82 is provided to the base 81. The rotation rod 82 is inclined so that its front side is inclined downward.

The rotation rod 82 is provided at the halfway portion with a rotation shaft (not shown) that is nearly orthogonal to the rotation rod 82. A positioning cam follower 83 is arranged at the rear end section of the rotation rod 82. The positioning cam follower 83 is a cylindrical roller that is rotatable around an axis in parallel with the rotation shaft. The front end section of the rotation rod 82 is provided with a rod member 85 extending in the axial direction. The rod member 85 is connected to the base 81 via springs (not shown). The front end section of the rotation rod 82 is connected to the central section of the rod member 85.

Both end sections of the rod member 85 are respectively provided with positioning pieces 86 extending downward. Each positioning piece 86 has a block shape. The positioning pieces 86 are opposed to each other. The dimension between the positioning pieces 86 is equal to or slightly larger than the axial dimension of an arm shaft 77. Said springs bias the positioning pieces 86 clockwise around the rotation shaft in right side view.

The grip arm 70 has a pair of mounting portions 73 that are installed on the moving carriage 43. A support rod 74 is connected to the mounting portions 73, and the support rod 74 protrudes downward from the mounting portion 73. The support rod 74 has a positioning pin 74a which makes contact with a pin receiving section 81c. The positioning pin 74a protrudes rearward from the support rod 74.

Portions connecting to the mounting portions 73 of the support rod 74 are fork-shaped connecting portions 74b. Each connecting portion 74b has an approximate rectangular shape, and keeps some distance away from each other. A space in which the connecting portions 74b oppose to each other is an opening portion 74c. The upper section of the opening portion 74c opposes to the base plate 46 of the moving carriage 43. The opening portion 74c has a same width portion which has the appropriate same width, a taper portion which continues from the same width portion and the width of which broadens gradually, another same width portion which continues from the taper portion, and another taper portion which continues from said another same width portion and the width of which narrows gradually.

A base portion that continues to the connecting portion 74b of the support rod 74 has a shape whose width at the center is narrow. The base portion has a number plate 74d on the surface, and the number plate 74 has the number of the grip arm 70.

A pair of guide plates 75 are respectively secured on the both side surfaces at the lower end portion of the support rod 74, which lead the swinging of an arm section 76. The guide plates 75 are opposed to each other. In the side view, each guide plate 75 has a fan shape expanding downward from the upper end section thereof serving as a pivot. The upper end section of the guide plate 75 has an arm shaft hole 75a into which the arm shaft 77 is inserted. The positioning pin 74a passes through the support rod 74 in a direction orthogonal to the axial direction of the arm shaft hole 75a and in a direction orthogonal to the up-down direction and protrudes from the support rod 74.

The arm section 76 is arranged between the guide plates 75, which extends in the up-down direction and has a bent shape at the approximate center portion. The arm shaft 77 is secured to the upper end section of the arm section 76, and both end sections of the arm shaft 77 protrude from both sides of the upper end section of the arm section 76. The both end sections of the arm shaft 77 are rotatably inserted into the arm shaft holes 75a. The lower end section of the arm section 76 is bifurcated. Holding cylinders 78 are arranged at the tip end sections of the bifurcated lower end section, which hold the grip pin units 79. The axial directions of the holding cylinders 78 are the same as that of the arm shaft 77. An arm cover 99 is secured to the outer portion at the lower section of the arm section 76. A portion positioning the bifurcation of the arm cover 99 has a groove, and the arm cover has an approximate U shape.

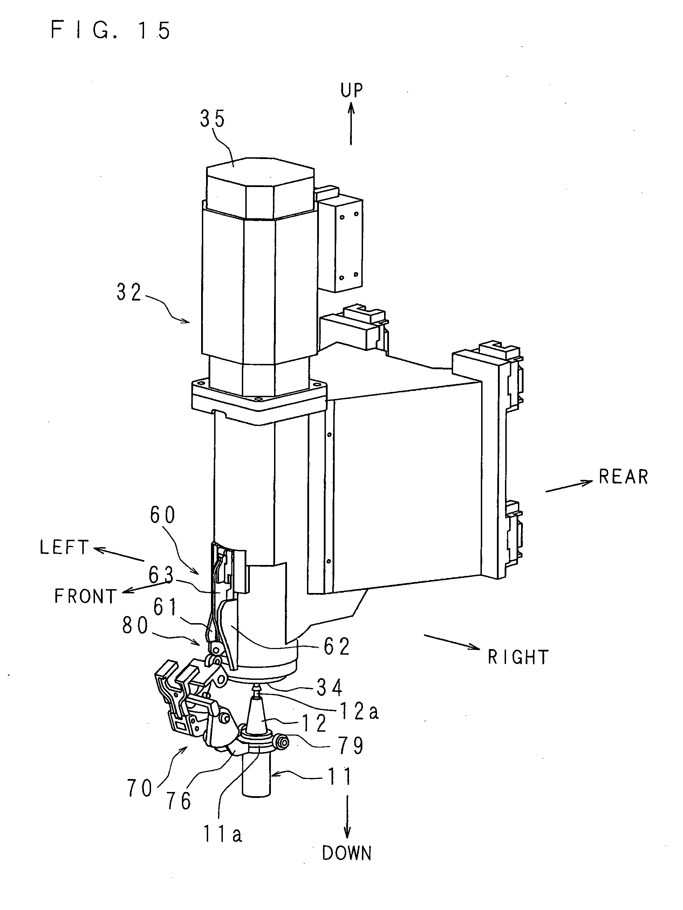

The grip arm 70 is secured to the lower surface of the moving carriage 43 so that the arm shaft 77 is moved along the rail 41c. The grip pin unit 79 has a pin 79b accommodated in a holder 79a having a closed cylinder shape. The tip end section of the pin 79b protrudes from the holder 79a, and a spring (not shown) inside the holder 79a biases the pin 79b in the protruding direction. The tip end face of the pin 79b has a curved shape protruding outward. The tip end faces of the pins 79b are opposed to each other, and each grip pin unit 79 is inserted into each holding cylinder 78 and secured thereto. The lower side of the tapered mounting section 12 of the tool holder 11 has a groove 11a around the entire circumference thereof (see FIG. 15). When the tool holder 11 is inserted between the pins 79b, each pin 79b is fitted in the groove 11a, thereby holding the tool holder 11.

The first cam follower 71 making contact with an approaching cam 61 is provided above the arm shaft 77. The first cam follower 71 protrudes upward. The first cam follower 71 is a circular roller and rotates around an axis in parallel with the arm shaft 77. A second cam follower 72 making contact with an separating cam 62 is provided to the arm section 76. The second cam follower 72 is a circular roller and rotates around an axis in parallel with the arm shaft 77.

The moving carriage 43 has the base plate 46, a plurality of the inner rollers 47, a plurality of the outer rollers 48, and a plurality of pins 49. The base plate 46 has a nearly rectangular shape and supports the inner rollers 47 and the outer rollers 48 on its lower face so that the rollers 47, 48 are rotatable around their axes in the normal direction of the lower face. The inner roller 47 and the outer roller 48 have main bodies 47a, 48a having laterally wide cylindrical shapes, and their upper portions and lower portions are tapered to the end portions, respectively.

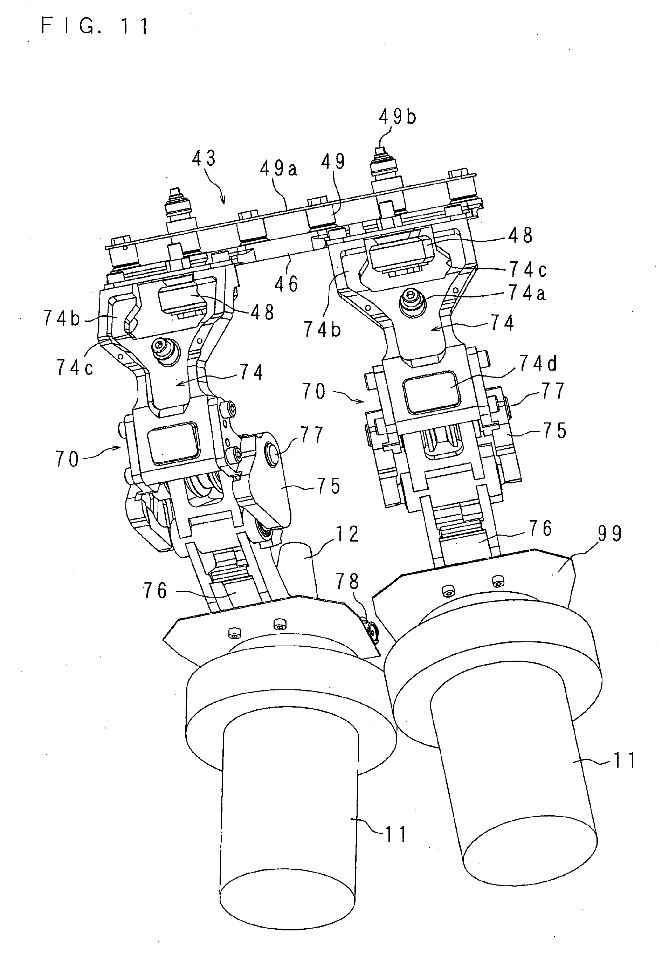

As shown in FIG. 11, the six pins 49 are provided on the upper face of the base plate 46 of the moving carriage 43. When the moving carriage 43 is located at the semicircular portion of the rail 41c, the pins 49 on the moving carriage 43 are arranged on a circumference concentric with the semicircle. The plurality of pins 49 are engaged with the gear 51. For example, the pin 49 has a cylindrical collar engaged to a periphery of the secured shaft in a rotatable manner. Because the collar engaged with the gear 51 rotates, it is possible to reduce the friction and abrasion.

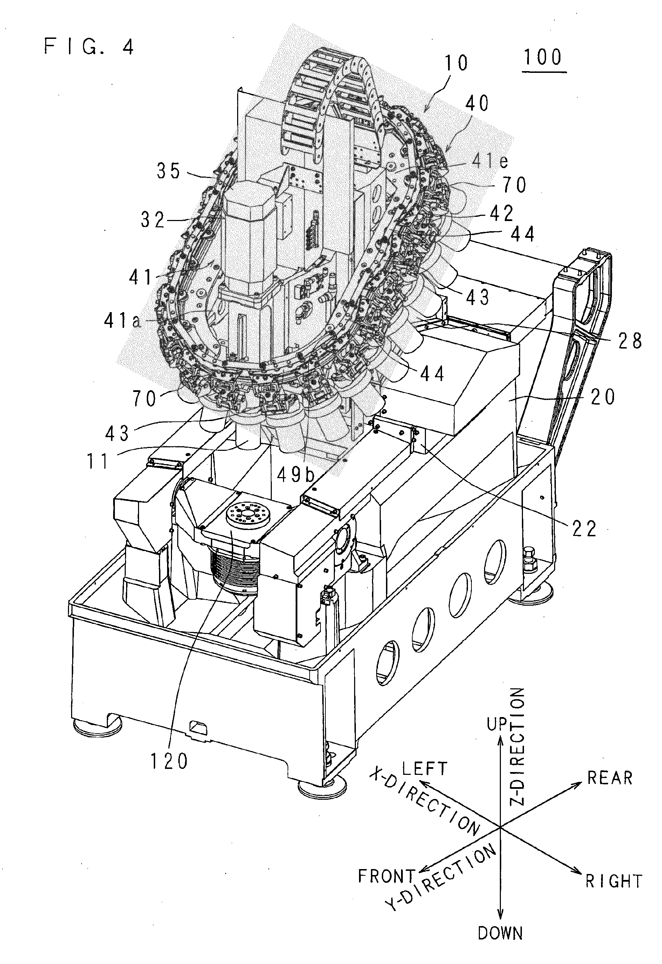

Connecting shaft members 49b are provided on the second pins 49 of the six pins 49 arranged on the one base plate 46 from both ends. The link member 44 is connected to the moving carriage 43 through the connecting shaft member 49b (see FIG. 4). Two grip arms 70 are arranged at the lower section of the moving carriage 43.

The tip end section of the grip arm 70 which grips the tool holder 11 is swung around the axis of the arm shaft 77 to exchange tools. The axial direction of the arm shaft 77 is a direction along the arc of the semi-circular section in the elliptic rail 41c. The grip arm 70 is secured to the moving carriage 43 to make a plane, including the axis of the tool holder 11 and treating the axial direction of the arm shaft 77 as a normal line direction, pass the center portion of the semi-circular section of the rail 41 when the moving carriage 43 is positioned at the semi-circular section of the rail 41c.

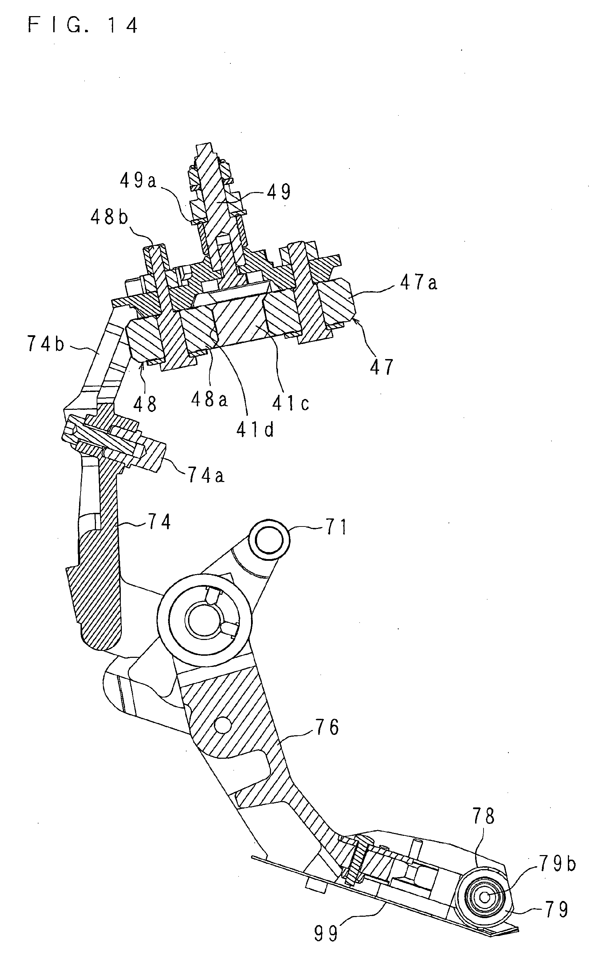

As shown in FIG. 14, the rail 41c has a rectangular cross section and forms an elliptic rail on the rail base 41b. The rail 41c has fitting sections 41d formed respectively on the inner circumferential side face and outer circumferential side face of the elliptic rail thereof. The cross section of the rail 41c is rectangular. The upper section and lower section of the fitting section 41d become wider toward the end sections. The inner roller 47 and outer roller 48 are fit to the fitting section 41d. The shapes of the fitting sections 41d arranged at the both sides of the rail 41c, inner roller 47 and outer roller 48 are not limited to the shapes described above. Side surfaces of the inner roller 47 and outer roller 48 may include V-grooves, and the fitting section 41d may include a salient portion fit into the V-groove.

The cam mechanism 60 has an approaching cam 61, a separating cam 62, and a positioning cam 63.

Exchanging the tool holder 11 will be schematically explained below. When work machining is completed, the tool holder 11 is mounted in the spindle 34. One of the grip arms 70 stands by at the exchange position. No tool holder 11 is gripped by the grip arm 70. The arm section 76 orients the holding cylinders 78 downward and is suspended with the arm shaft as the fulcrum. The arm section 76 is swingable in the front-rear direction around the arm shaft 77 serving as the center of the swinging. The first cam follower 71, the second cam follower 72, and the positioning cam follower 83 do not make contact with the approaching cam 61, the separating cam 62, and the positioning cam 63. A locking mechanism (not shown) is provided between the arm section 76 and the guide plates 75. The locking mechanism has a first locking condition that keeps the arm section 76 orienting the holding cylinders 78 downward and keeps the arm shaft 77 suspended by the fulcrum, and a second locking condition described later.

The spindle head 32 rises, and the positioning cam follower 83 makes contact with the upper cam face of the positioning cam 63. Each positioning piece 86 is opposed to both end sections of the arm shaft 77 so as to hold the arm shaft 77 therebetween in the axial direction. Since the positioning pieces 86 make contact with the arm shaft 77, the force exerted rearward and obliquely downward is applied to the entire grip arm 70, and the positioning pin 74a makes contact with the L-shaped pin receiving section 81c in side view. The grip arm 70 is positioned in the up-down direction and the front-rear direction. The first cam follower 71 is located on the cam face of the approaching cam 61. The second cam follower 72 is located on the cam face of the separating cam 62.

The spindle head 32 in which the tool holder 11 is mounted is raised further. The grip pin units 79 move close to the tool holder 11. The pins 79b of the grip pin units 79 are fitted into the groove 11a of the tool holder 11. The grip arm 70 grips the tool holder 11.

The spindle head 32 rises further and the tool holder 11 is removed from the spindle 34. The first cam follower 71, the second cam follower 72, and the positioning cam follower 83 move away from the approaching cam 61, the separating cam 62, and the positioning cam 63. The locking mechanism described above has the second locking condition (the condition of FIG. 15) in which the arm section 76 orients the holding cylinders 78 rearward and the arm shaft 77 is suspended at the fulcrum.

The tool magazine 40 is rotated to convey the grip arm 70 gripping another tool holder 11 to the exchange position. Even when the grip arm 70 is moved by the rotation of the tool magazine 40, the lock of the arm section 76 lead by the locking mechanism (second locking condition) is not released and the state of the grip arm 70 can be kept.

After grip arm 70 having gripped the other tool holder 11 is conveyed to the exchange position, the spindle head 32 starts lowering. The positioning cam follower 83 makes contact with the lower end section of the positioning cam 63.

The spindle head 32 lowers further. Each positioning piece 86 is opposed to both end sections of the arm shaft 77 so as to hold the arm shaft 77 therebetween in the axial direction. Since the positioning pieces 86 make contact with the arm shaft 77, the force exerted rearward and obliquely downward is applied to the entire grip arm 70, and the positioning pin 74a makes contact with the L-shaped pin receiving section 81c in the side view. The grip arm 70 is positioned in the up-down direction and in the front-rear direction. After the positioning of the grip arm 70 is completed, the spindle head 32 lowers further. Thus, the tool holder 11 gripped by the grip arm 70 is mounted in the spindle 34. The second cam follower 72 makes contact with the lower end section of the separating cam 62.

The spindle head 32 lowers further. As the spindle head 32 lowers, the second cam follower 72 moves upward on the separating cam 62. The separating cam 62 exerts a forward force to the second cam follower 72, and the grip arm 70 is swung clockwise around the arm shaft 77 serving as the center of the swinging. The grip pin units 79 are separated from the tool holder 11. At that time, the lock of the second locking condition is released and the locking mechanism shifts to the first locking condition.

The spindle head 32 in which the tool holder 11 is mounted lowers further and moves toward the machining position. The grip arm 70 is swung further clockwise, and gets away from the spindle head 32, whereby the grip arm 70 does not interfere with the spindle head 32. The first cam follower 71, the second cam follower 72, and the positioning cam follower 83 move away from the approaching cam 61, the separating cam 62 and the positioning cam 63. The locking mechanism returns to the first locking condition.

As described above, the tool magazine 40 circulates plural moving carriages 43 supporting the tool holders 11 along the rail 41c to sequentially mount each tool to the spindle 34, and to perform machining sequentially on each work.

The cover 90 will be explained.

The cover 90 includes an upper plate portion 91, an outer plate portion 92, a lower plate portion 93, and an inner plate portion 94.

The upper plate portion 91 has an octagonal shape elongated much more than the octagon, and includes an opening 91a at the center portion. The spindle head 32 and column 28 can pass the opening 91a.

The outer plate portion 92 is arranged at the outer edge of the upper plate portion 91 to be inclined and extend outwardly and downwardly. The outer plate portion 92 includes a window portion 98 at the center on the front side. The window portion 98 is arranged on the outer plate portion 92 opposing to the number plate 74d (described later) of the grip arm 70 positioned to the notch 97 (described later).

The lower plate portion 93 is arranged at the lower edge of the outer plate portion 92 to be inclined and extend inwardly and downwardly. The lower plate portion 93 includes the notch 97 at the front side portion, and the notch 97 is opened at the forward-downward portion.

The inner plate portion 94 is arranged at the portion excluding the front edge portion (the side of spindle head 32) and rear edge portion (the side of magazine drive section 50) in the inner edge of the upper plate portion 91, to extend downwardly.

A pair of spindle shields 95 are provided at the front and lower edge of the inner plate portion 94, and spindle shields 95 are spaced to each other. The space between the pair of spindle shields 95 configures the opening 96. The spindle shield 95 includes a flange 95a at the lower edge, and the flange 95a protrudes outwardly. It should be noted that the size in the height direction of the front portion of the inner plate portion 94 having the spindle shield 95 may be longer than the size in the height direction of another inner plate portion 94, and that the spindle shield 95 may be omitted.

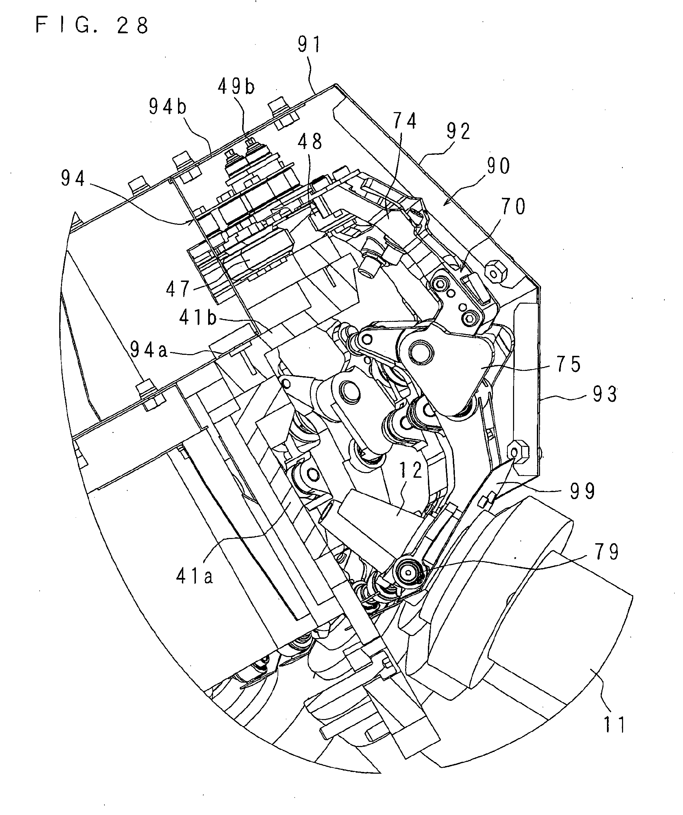

The flanging portion 94a flanging inwardly from the lower edge of the inner plate portion 94 is fixed to the rail base 41b by the screw, and the flanging portion 94b flanging outwardly from the upper edge of the inner plate portion 94 is fixed to the upper plate portion 91 by the screw, to attach the cover 90 with the rail section 41 (see FIG. 28).

The upper plate portion 91, outer plate portion 92, lower plate portion 93, inner plate portion 94 and spindle shield 95 cover the grip arm 70.

The spindle head 32 (not shown in figures) can move upwardly and downwardly at the trapezoidal edge portion side on the front of the cover 90. The magazine drive motor 52 can drive the gear 51 to make it rotate at the trapezoidal edge portion side on the rear of the cover 90.

The worker can look at the number described on the number plate 74d of the support rod 74 in the grip arm 70 positioned at the exchange position, from the window 98 of the outer plate portion 92.

The notch 97 of the lower plate portion 93 follows the lowering of the spindle head 32 at the exchange position, and prevents the contact of the arm section 76 with the cover 90 when the arm section 76 of the grip arm 70 starts swinging and protrudes forwardly.

The worker can pull out the tool holder 11 laterally at the opening 96 between the pair of spindle shields 95.

As described above, the arm section 76 can protrude from the notch 97, when the spindle head 32 moves downwardly at the exchange position and the arm section 76 starts swinging forwardly. The arm section 96 can protrude outside the cover 90, without making the arm cover 99 interfere with the lower plate portion 93. It is preferred that the notch 97 has a size which covers the arm cover 99 positioned on the plane of the notch 97 approximately.

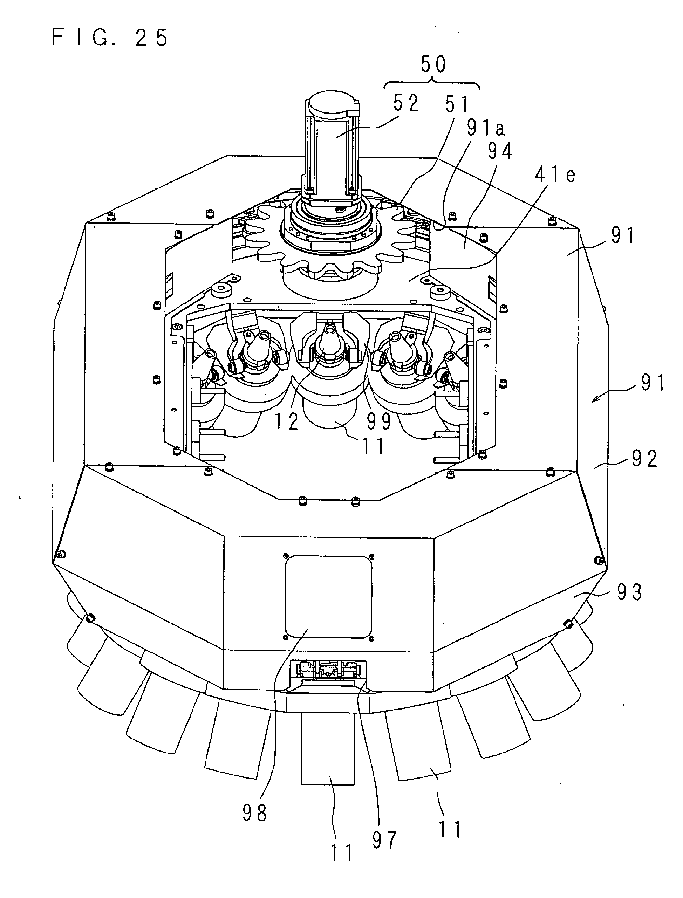

The edge of the upper plate portion 91 has a trapezoidal shape, and the inner plate portion 94 is arranged at the portion excluding the trapezoidal rear edge portion. Thus, the gear 51 of the magazine drive section 50 can rotate without troubles, the pin 49 of the moving carriage 43 can engage with the gear 51, and the grip arm 70 can be circulated. As shown in FIG. 25, the mounting base 41e covers the tool holder 11 gripped by the grip arm 70 at the side of magazine drive section 50 and covers the tapered mounting section 12, to prevent the attachment of chips and coolant. As shown in FIG. 28, the rail base 41b is attached to the support beam 41a, and the flanging portion 94a of the inner plate portion 94 is fixed on the rail base 41b by the screw. In the cover 90, the upper plate portion 91 is fixed to the flanging portion 94b of the inner plate portion 94 by the screw, and the outer plate portion 92 and lower plate portion 93 on the upper plate portion 91 are fixed as the cantilevers.

The configurations described above can surely attach the cover 90 to the tool magazine 40.

The sizes of upper plate portion 91, and the inclinations and sizes of the outer plate portion 92 and lower plate portion 93 are decided, in consideration of making the tool magazine 40 circulate the grip arm 70, of making the spindle head 32 sequentially connect and detach the tool holder 11, and of making the gap in the cover 90 become smaller. The outer plate portion 92 and lower plate portion 93 may be formed in arc shapes.

In the present embodiment, the inner plate portion 94 and spindle shield 95 prevents the chips and coolant splashed by the machining with the spindle head 32 from attaching to the each portion of the tool magazine including the tapered mounting section 12 inside.

The upper plate portion 91, outer plate portion 92 and lower plate portion 93 inhibit the attachment of the chips and the like from the upper side, outer side and lower side, respectively. The arm cover 99 inhibits the attachment of chips and the like coming from the below, too.

Therefore, it is possible to operate the tool magazine well with keeping good positional accuracy of the grip arm 70 and the like. It prevents the position aberration for the tool with respect to the spindle head 32 when the tapered mounting section 12 is mounted to the spindle head 32, and prevents the deterioration of the machining accuracy.

It is not limited to the single opening 96 arranged at the front side. An element corresponding to the opening 96 may be arranged at plural positions. For example, such an element may be arranged at three positions, front side and right and left sides.

The window portion 98 may be arranged at a position other than the center portion on the front side of the outer plate portion 92. For example, it may be arranged at a position opposing to the grip arm adjacent to the exchange position. Plural window portions 98 may be provided. The window portion 98 may be covered by a transparent cover.

The spindle shield 95 may be attached to the lower surface of the rail base 41b.

## Claims

1. A machine tool (100) having a column (28) disposed on a base (20) in a manner movable right and left as well as back and forth, a machine spindle unit (32) disposed on the column in a manner movable upwardly and downwardly, plural grip arms (70) gripping tools and being able to swing around arm shafts (77), a tool magazine (40) making the plural grip arms circulate along a circulation pathway around a axis and a magazine drive section (50) driving the tool magazine, wherein a tool gripped by the grip arm is exchanged to a tool of the machine spindle unit by an up and down movement of the machine spindle unit, comprising:
a cover (90) which covers the grip arms and the tool magazine, **characterised in that**:
the cover comprises:
an upper plate portion (91) which is disposed on an upper side of the circulation pathway and has an opening (91a) at a center portion through which the machine spindle unit and the column can pass;
an outer plate portion (92) which extends to a lower side from an outer perimeter of the upper plate portion;
an inner plate portion (95) which extends to a lower side from an edge, excluding the magazine drive section's side and the machine spindle unit's side, among an inner perimeter of the upper plate portion; and
a lower plate portion (93) which extends to the lower side and the opening's side from a lower edge of the outer plate portion,
the axis is inclined to the machine spindle unit's side with respect to a vertical line, and
the lower plate portion positioned at the machine spindle unit's side includes a notch (97) at a lower edge through which the grip arm can pass when the grip arm swings.

2. The machine tool according to Claim 1, comprising:
an arm cover (99) disposed around a portion where the grip arm grips the tool.

3. The machine tool according to Claim 2, wherein
the grip arm comprises a support rod (74), a pair of guide plates (75) fixed at both sides of the support rod, and an arm section (76) disposed between the pair of guide plates,
the arm shaft is fixed to the support rod and the guide plates, and supports the arm section in a swingable manner,
the support rod comprises a number plate (74d) indicating a number of the grip arm, and
the outer plate portion at a position facing to the number plate includes a window portion (98).

4. The machine tool according to Claim 3, wherein
the window portion is disposed on the outer plate portion at a position corresponding to the notch and facing to the number plate of the grip arm.

## Patentansprüche

1. Maschinenwerkzeug (100) mit einer Säule (28), die an einer Basis (20) in einer Weise angeordnet ist, dass sie nach rechts und nach links sowie nach hinten und nach vorne bewegbar ist, einer Maschinenspindeleinheit (32), die an der Säule in einer Weise angeordnet ist, dass sie nach oben und nach unten bewegbar ist, vielen Greifarmen (70), die Werkzeuge greifen und dazu in der Lage sind, um Armschäfte (77) zu schwenken, einem Werkzeugmagazin (40), das die vielen Greifarme zum Zirkulieren entlang eines Zirkulationspfades um eine Achse veranlasst, und einem Magazinantriebsbereich (50), der das Werkzeugmagazin antreibt, wobei ein durch den Greifarm gegriffenes Werkzeug durch ein Werkzeug der Maschinenspindeleinheit mittels einer Aufwärts- und Abwärtsbewegung der Maschinenspindeleinheit ausgetauscht wird, mit:
einer Abdeckung (90), die die Greifarme und das Werkzeugmagazin abdeckt, **dadurch gekennzeichnet, dass**
die Abdeckung Folgendes aufweist:
einen oberen Plattenabschnitt (91), der an einer oberen Seite des Zirkulationspfades angeordnet ist und eine Öffnung (91a) an einem mittleren Abschnitt hat, durch den die Maschinenspindeleinheit und die Säulen hindurchtreten können;
einen äußeren Plattenabschnitt (92), der sich zu einer unteren Seite von einem Außenumfang des oberen Plattenabschnitts erstreckt;
einen inneren Plattenabschnitt (95), der sich zu einer unteren Seite von einer Kante, die die Seite des Magazinantriebsbereiches und die Seite der Maschinenspindeleinheit ausschließt, von einem Innenumfang des oberen Plattenabschnitts erstreckt; und
einen unteren Plattenabschnitt (93), der sich zu der unteren Seite und der Seite der Öffnung von einer unteren Kante des äußeren Plattenabschnitts erstreckt,
die Achse zu der Seite der Maschinenspinmdeleinheit hinsichtlich einer vertikalen Line geneigt ist, und
der untere Plattenabschnitt, der an der Seite der Maschinenspindeleinheit positioniert ist, eine Aussparung (97) an einer unteren Kante aufweist, durch die der Greifarm hindurchtreten kann, wenn der Greifarm schwenkt.

2. Maschinenwerkzeug gemäß Anspruch 1, mit:
einer Armabdeckung (99), die um einen Abschnitt herum angeordnet ist, an dem der Greifarm das Werkzeug greift.

3. Maschinenwerkzeug gemäß Anspruch 2, wobei
der Greifarm einen Stützstsab (74), ein Paar Führungsplatten (75), die an beiden Seiten des Stützstabes befestigt sind, und einen Armbereich (76) aufweist, der zwischen dem Paar Führungsplatten angeordnet ist,
wobei der Armschaft an dem Stützstab und den Führungsplatten befestigt ist und den Armbereich schwenkbar stützt,
der Stützstab eine Nummernplatte (74d) aufweist, die eine Nummer des Greifarms angibt, und
der äußere Plattenabschnitt einen Fensterabschnitt (98) an einer Position gegenüber der Nummernplatte aufweist.

4. Maschinenwerkzeug gemäß Anspruch 3, wobei
der Fensterabschnitt an dem äußeren Plattenabschnitt an einer Position entsprechend der Aussparung angeordnet ist und der Nummernplatte des Greifarms zugewandt ist.

## Revendications

1. Machine-outil (100) comprenant une colonne (28) disposée sur une base (20) de manière à pouvoir être déplacée vers la droite et vers la gauche de même que vers l'avant et vers l'arrière, une unité formant broche de machine (32) disposée sur la colonne de manière à pouvoir être déplacée vers le haut et vers le bas, plusieurs bras de saisie (70) saisissant des outils et pouvant basculer autour d'axes de bras (77), un magasin porte-outils (40) assurant la circulation des différents bras de saisie le long d'un trajet de circulation autour d'un axe et une section d'entraînement de magasin (50) entraînant le magasin porte-outils, dans lequel un outil saisi par le bras de saisie est échangé pour un outil de l'unité formant broche de machine par un mouvement ascendant et descendant de l'unité formant broche de machine, comprenant :
un couvercle (90) qui recouvre les bras de saisie et le magasin d'outil, **caractérisé en ce que** :
le couvercle comprend :
une partie de plaque supérieure (91) qui est disposée sur un côté supérieur du trajet de circulation et présente une ouverture (91a) au niveau d'une partie centrale à travers laquelle l'unité formant broche de machine et la colonne peuvent passer ;
une partie de plaque externe (92) qui s'étend vers un côté inférieur à partir d'un périmètre externe de la partie de plaque supérieure ;
une partie de plaque interne (95) qui s'étend vers un côté inférieur à partir d'un bord, excluant le côté de la section d'entraînement de magasin et le côté de l'unité formant broche de machine, parmi le périmètre interne de la partie de plaque supérieure ; et
une partie de plaque inférieure (93) qui s'étend vers le côté inférieur et le côté de l'ouverture à partir d'un bord inférieur de la partie de plaque externe,
l'axe est incliné vers le côté de l'unité formant broche de machine par rapport à une ligne verticale, et
la partie de plaque inférieure positionnée au niveau du côté de l'unité formant broche de machine comporte une encoche (97) au niveau d'un bord inférieur à travers lequel le bras de saisie peut passer lorsque le bras de saisie bascule.

2. Machine-outil selon la revendication 1, comprenant :
un couvercle de bras (99) disposé autour d'une partie sur laquelle le bras de saisie saisit l'outil.

3. Machine-outil selon la revendication 2, dans laquelle
le bras de saisie comprend une tige de support (74), une paire de plaques de guidage (75) fixées des deux côtés de la tige de support et une section de bras (76) disposée entre les plaques de la paire de plaques guidage,
l'axe de bras est fixé sur la tige de support et les plaques de guidage, et supporte la section de bras de manière à pouvoir basculer,
la tige de support comprend une plaque numérotée (74d) indiquant un numéro du bras de saisie, et
la partie de plaque externe au niveau d'une position faisant face à la plaque numérotée comporte une partie en fenêtre (98).

4. Machine-outil selon la revendication 3, dans laquelle
la partie en fenêtre est disposée sur la partie de plaque externe à une position correspondant à l'encoche et faisant face à la plaque numérotée du bras de saisie.
